# FASCICULE DE BREVET EUROPEEN

(11) **EP 0 436 423 B1**
(45) Date de publication et mention de la délivrance du brevet: **10.02.1993**
(21) Numéro de dépôt: 90403694.4
(22) Date de dépôt: 20.12.1990
(51) Int. Cl.: B01J 19/28, B01D 29/01, C08F 4/60, C08F 10/00, H02K 49/10

(54) **Procédé de synthèse de solides catalytiques de type Ziegler ou de composantes solides de tels solides catalytiques en opérant dans un réacteur pivotant polyfonctionnel unique, et agitateur à entraînement magnétique utilisable, entre autres, dans un tel réacteur**
Syntheseverfahren für Feststoff-Ziegler-Katalysatoren oder für feste Verbindungen solcher Katalysatoren mittels eines einzigen schwenkbaren, polyfunktionalen Reaktors und ein magnetangetriebenes Rotationsrührwerk zum Gebrauch innerhalb eines solchen Reaktors
Synthesis process for Ziegler type solid catalysts or for solid compositions of such catalytic solids, using a unique pivotable polyfunctional reactor and a magnetically driven agitator, usable among others, in such a reactor

(30) Priorité: 22.12.1989 FR 8917071
(43) Date de publication de la demande: 10.07.1991
(73) Titulaire: SOCIETE NATIONALE ELF AQUITAINE, 92400 Courbevoie (FR)
(72) Inventeur: Brun, Claude, F-64320 Idron (FR)
(74) Mandataire: Rochet, Michel

(56) Documents cités:
- EP-A- 0 327 649
- DE-A- 2 459 743
- US-A- 4 681 924
- PATENT ABSTRACTS OF JAPAN, vol. 7, no. 114 (C-166), 18 mai 1983.
- IDEM

## Description

L'invention a trait à un procédé de synthèse de solides catalytiques de type Ziegler ou de composantes solides de tels solides catalytiques en opérant dans un réacteur pivotant polyfonctionnel unique. Elle concerne encore un agitateur à entraînement magnétique utilisables, entre autres, dans ledit réacteur pivotant.

Les solides catalytiques de type Ziegler, qui sont utilisés notamment comme catalyseurs de polymérisation ou de copolymérisation des alpha-oléfines en polymères de hautes masses moléculaires, sont des solides actifs résultant de la mise en contact d'au moins un composé d'un métal de transition des groupes IV à VIII du Tableau Périodique des Eléments, notamment un chlorure, oxychlorure ou alcoolate d'un métal tel que titane, vanadium, zirconium ou chrome, avec au moins un composé organométallique d'un métal des groupes I à III du Tableau Périodique des Eléments, par exemple un composé organoaluminium ou organomagnésium.

Pour produire des polymères ou copolymères oléfiniques à faible taux de cendres, les alpha-oléfines sont polymérisées ou copolymérisées au moyen de solides catalytiques de type Ziegler supportés, qui possèdent une haute activité.

Ces catalyseurs supportés sont généralement obtenus en associant un composé de métal de transition tel que précité, par exemple un composé de titane tel que TiCl₄, TiCl₃ ou un titanate ou chlorotitanate d'alcoyle, avec un composé de magnésium et en particulier MgCl₂ ou un système précurseur d'un tel produit, et éventuellement un composé organique donneur d'électrons et/ou un support poreux du type silice ou oxyde métallique ou un système précurseur d'un tel support poreux. Les produits solides résultant de ladite association doivent être activés lorsqu'ils sont engagés en polymérisation des alpha-oléfines par addition de cocatalyseurs consistant en composés réducteurs organométalliques le plus souvent du type organoaluminium ou organomagnésium et, avant activation, on peut les désigner par composantes solides de métaux de transition supportées pour solides catalytique de type Ziegler supportés.

Les modes opératoires utilisés pour la synthèse de solides catalytiques de type Ziegler supportés ou non supportés ou pour la synthèse de composantes solides de métaux de transition pour de tels solides catalytiques consistent tout d'abord à produire ledit solide catalytique ou ladite composante sous la forme d'une suspension dans un milieu liquide inerte par mise en contact des ingrédients précurseurs dudit solide catalytique ou de ladite composante dans ledit milieu liquide inerte, en réalisant cette mise en contact en une seule étape ou bien en plusieurs étapes séparées l'une de la suivante, si besoin est, par une filtration et éventuellement par un lavage du résidu solide de filtration et/ou un séchage dudit résidu lavé, puis on soumet la suspension de solide catalytique ou de la composante à une filtration, on lave le solide issu de la filtration une ou plusieurs fois à l'aide d'un liquide inerte aux fins de purification, on recueille la suspension ou, de préférence, on sèche le solide lavé et recueille le solide séché, le solide en suspension ou séché recueilli constituant le solide catalytique de type Ziegler ou la composante solide de métal de transition dudit solide catalytique.

Pour réaliser ces diverses opérations, on utilise de manière conventionnelle au moins un ensemble formé d'un réacteur agité suivi, en série, d'un filtre sécheur et le plus souvent une pluralité de tels ensembles montés en cascade. La mise en contact, en une ou plusieurs étapes, des ingrédients générateurs du solide catalytique ou de sa composante de métal de transition dans le milieu liquide inerte pour produire la suspension est réalisée dans le ou les réacteurs agités, tandis que les opérations de filtration de la suspension, de lavage du solide filtré et de séchage du solide lavé sont effectuées dans le ou les filtres sécheurs, ce qui nécessite le plus souvent plusieurs transferts de matière du ou des réacteurs agités vers le ou les filtres sécheurs associés et vice-versa. Outre des durées de synthèse importantes, cette manière d'opérer entraîne des pertes sensibles de matière durant chaque transfert d'un réacteur vers le filtre associé et introduit des risques non-négligeables de pollution du solide catalytique préparé ou de sa composante. Elle entraîne également une consommation importante de solvant notamment pour la réalisation des divers rinçages.

On a trouvé que l'on pouvait remédier aux inconvénients précités en mettant en oeuvre la synthèse du solide catalytique de type Ziegler ou de sa composante dans un réacteur pivotant polyfonctionnel unique du type réacteur agité filtrant. Cette manière d'opérer évite, en particulier, les pertes de matière et les risques de pollution rencontrés lors des transferts de matière entre réacteurs et filtres sécheurs dans les mises en oeuvre conventionnelles. En outre, elle permet de passer rapidement d'une opération unitaire à l'autre avec comme résultat une réduction sensible de la durée globale de synthèse du solide catalytique ou de sa composante. Enfin, elle rend possible l'automatisation des enchaînements d'opérations unitaires.

Le procédé selon l'invention de synthèse d'un solide catalytique de type Ziegler ou d'une composante solide de métal de transition d'un tel catalyseur est du type dans lequel on produit tout d'abord ledit solide catalytique ou sa composante sous la forme d'une suspension dans un milieu liquide inerte par mise en contact des ingrédients précurseurs dudit solide catalytique ou de ladite composante dans ledit milieu liquide inerte, en réalisant cette mise en contact en une seule étape ou bien en plusieurs étapes séparées l'une de la suivante, si besoin est, par une filtration et éventuellement par un lavage du résidu solide de filtration et/ou un séchage dudit résidu lavé, puis on soumet la suspension du solide catalytique ou de la composante à une filtration, on lave le solide issu de la filtration une ou plusieurs fois à l'aide d'un liquide inerte aux fins de purification, on recueille la suspension ou, de préférence, on sèche le solide lavé et recueille le solide séché, le solide en suspension ou séché recueilli constituant le solide catalytique de type Ziegler ou sa composante, et il se caractérise en ce que l'on opère dans un réacteur polyfonctionnel unique présentant un axe longitudinal et susceptible de pivoter autour d'un axe coupant perpendiculairement cet axe longitudinal, ledit réacteur comprenant une enceinte, à température réglable, symétrique par rapport à l'axe longitudinal du réacteur et divisée, par une plaque filtrante disposée perpendiculairement à l'axe du réacteur, en une zone primaire, qui comprend un espace de filtration adjacent à la plaque filtrante et un espace de réaction à l'opposé de cette plaque, et une zone secondaire de plus faible volume que la zone primaire, ladite zone primaire étant pourvue, d'une part, d'un moyen d'agitation, notamment moyen de raclage, rotatif proche de la plaque filtrante et agissant dans l'espace de filtration et d'un moyen d'agitation rotatif agissant dans l'espace de réaction et, d'autre part, d'au moins un orifice d'amenée et d'évacuation de réactifs s'ouvrant dans l'espace de réaction de la zone primaire et d'au moins un orifice d'amenée et d'évacuation de réactifs et de produit synthétisé s'ouvrant dans l'espace de filtration au voisinage de la plaque filtrante et dont l'axe rencontre l'axe longitudinal du réacteur perpendiculairement à l'axe de pivotement dudit réacteur, tandis que la zone secondaire comporte au moins un orifice pour l'évacuation et l'injection d'un fluide, ledit réacteur étant susceptible de pivoter de 180°, autour de son axe de pivotement, pour passer d'une position, dite position basse, pour laquelle l'axe du réacteur est vertical et la zone secondaire de l'enceinte se trouve au-dessus de la zone primaire à une position, dite position haute, pour laquelle l'axe du réacteur est vertical et la zone primaire de l'enceinte est située au-dessus de la zone secondaire, et d'occuper également des positions intermédiaires inclinées sur la verticale, et en ce que chacune des étapes de mise en contact d'ingrédients précurseurs conduisant à l'obtention d'une suspension d'un produit solide dans un milieu liquide inerte ainsi que certaines des opérations de lavage de la suspension sont réalisées dans l'espace de réaction de la zone primaire alors que le réacteur est en position basse, tandis que chacune des opérations de filtration et de séchage et certaines des opérations de lavage sont réalisées dans l'espace de filtration de la zone primaire alors que le réacteur est en position haute, les filtrats et liquides de lavage étant évacués par l'orifice de la zone secondaire, tandis que le séchage du solide filtré et lavé est réalisé de toute manière appropriée et, de préférence, au moyen d'un gaz inerte injecté dans le réacteur par l'orifice de la zone secondaire, le solide en suspension ou séché étant évacué du réacteur par l'orifice situé dans la zone primaire au voisinage de la plaque filtrante après avoir incliné le réacteur, par pivotement, dans une position appropriée pour cette évacuation.

Le procédé selon l'invention est utilisable pour la synthèse de solides catalytiques du type Ziegler non supportés, mais il trouve tout son intérêt pour la synthèse de solides catalytiques de type Ziegler supportés ou de composantes solides de métaux de transition supportées pour de tels catalyseurs.

En opérant selon l'invention, on peut mettre en oeuvre les différentes synthèses connues de solides catalytiques de type Ziegler non supportés ou supportés ou de composantes solides de métaux de transition pour solides catalytiques de type Ziegler supportés, qui génèrent une suspension d'un solide dans un milieu liquide inerte à partir d'ingrédients précurseurs.

On peut ainsi préparer un solide catalytique de type Ziegler non supporté en faisant appel à une réaction, mise en oeuvre dans un milieu liquide inerte, entre au moins un composé de métal de transition des groupes IV à VIII du Tableau Périodique des Eléments et au moins un composé organométallique d'un métal des groupes I à III dudit Tableau Périodique, notamment organoaluminium ou/et organomagnésium, pour former un produit insoluble dans ledit milieu inerte.

Pour la préparation d'un solide catalytique de type Ziegler supporté on peut, par exemple, faire appel à une mise en contact, dans un milieu liquide inerte, entre un composé de métal de transition tel que mentionné plus haut, un produit apte à constituer un support et un composé organométallique tel que précité. Dans un tel schéma de préparation, on réalise avantageusement une mise en contact du composé de métal de transition avec le support, puis on met en contact le produit résultant avec le composé organométallique, le support pouvant être formé à partir d'ingrédients précurseurs ou/et pouvant subir un traitement de modification, par exemple une chloration par un agent chlorant tel que HCl, immédiatement avant sa mise en contact avec le composé de métal de transition ou au cours de la dite mise en contact.

De même, pour la synthèse de la composante solide de métal de transition on peut, par exemple, faire appel à une mise en contact, dans un milieu liquide inerte, entre un composé de métal de transition tel que défini précédemment et un produit apte à constituer un support, ledit support pouvant être formé à partir d'ingrédients précurseurs ou/et pouvant subir un traitement de modification, par exemple une chloration par un agent chlorant tel que HCl, immédiatement avant sa mise en contact avec le composé de métal de transition ou au cours de ladite mise en contact.

Le milieu liquide inerte dans lequel on réalise la mise en contact des ingrédients précurseurs du solide catalytique ou de la composante solide de métal de transition consiste le plus souvent en un hydrocarbure liquide et notamment en un hydrocarbure aliphatique liquide tel que n-hexane, n-heptane, ou encore isopentane.

Le composé de métal de transition est avantageusement un composé de titane, vanadium, chrome, zirconium ou hafnium, que l'on choisit de préférence parmi TiCl₄, TiCl₃, VCl₄, VOCl₃, CrCl₃ CrO₃, acétylacétonate de vanadium, acétylacétonate de chrome, Ti(OR)ₚ Cl₍₄₋ₚ₎, Zr(OR)ₚ Cl₍₄₋ₚ₎ et Hf(OR)ₚ Cl₍₄₋ₚ₎ avec R désignant un radical alcoyle en C₁ à C₈ ou un atome d'hydrogène et p est un nombre allant de 1 à 4.

Le support utilisé dans la préparation du solide catalytique supporté ou de la composante solide de métal de transition supportée d'un tel solide catalytique consiste le plus souvent en un composé solide de magnésium, notamment MgCl₂, MgO, MgCO₃, ClMgOH, phosphate de magnésium, RMgCl, Mg(OR)₂ et ClMgOR, R désignant un radical alcoyle en C₁ à C₈, ledit composé de magnésium étant éventuellement associé à AlCl₃ ou au produit résultant de la mise en contact d'AlCl₃ avec un donneur d'électrons. Le composé de magnésium peut être préparé également in situ par réaction d'un agent chlorant tel que chlorure d'alcoyle sur un composé Mg(R)₂, R ayant la signification précitée, ou un mélange d'un tel composé de magnésium avec un composé de type alumoxane ou aluminosiloxane. Le support peut consister également en l'association d'un composé solide de magnésium, préformé ou produit in situ, tel que mentionné ci-dessus et d'un composé poreux d'oxyde choisi parmi SiO₂, Al₂O₃, TiO₂, ZrO₂, zéolithes, oxydes mixtes renfermant SiO₂ et un ou plusieurs oxydes métalliques pris parmi ZrO₂, TiO₂, MgO et Al₂O₃ ou d'un produit organique polymérique ou non tel qu'un produit renfermant du silicium du type siloxane.

Le composé organométallique d'un métal des groupes I à III du Tableau Périodique des Eléments, que l'on utilise dans la production du solide catalytique de type Ziegler, est un composé pour lequel le métal est relié à au moins un radical hydrocarboné par une liaison carbone-métal. Le composé organométallique peut être avantageusement un composé hydrocarbylaluminium choisi parmi l'isoprénylaluminium, les composés alumoxanes répondant à la formule : 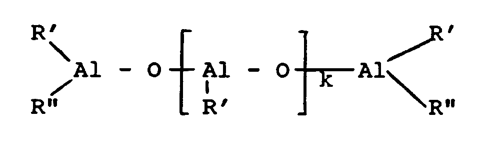
et les alcoylaluminium de formule Al(R′)_{q} Xᵣ Hₛ, dans lesquelles X représente Cl ou un radical monovalent OR′, R′ est un radical alcoyle en C₁ à C₁₆ et de préférence en C₁ à C₁₂, tandis que q, r et s sont des nombres tels que 1<q<3, O<r<2 et O<s<2 avec q+r+s = 3, les R˝ désignent chacun un radical R′ ou forment ensemble un radical bivalent - O -, et k est un entier allant de 0 à 18. Conviennent notamment les composés tels que Al(C₂H₅)₃, Al(C₂H₅)₂Cl, Al(i-C₄H₉)₃, Al₂(C₂H₅)₃Cl₃, Al(i-C₄H₉)₂H, Al(C₂H₅)H₂, Al(C₂H₅)₂ (OC₂H₅), Al(C₆H₁₃)₃ et Al(C₈H₁₇)₃.

Le composé organométallique peut être également choisi parmi les composés hydrocarbylmagnésium et les composés hydrocarbylzinc, et notamment parmi ceux desdits composés ayant les formules YMgR′ ou YZnR′, dans lesquelles Y représence Cl ou R′ et R′ est un radical alcoyle en C₁ à C₁₆ et de préférence en C₁ à C₁₂. Des exemples de tels composés sont notamment Mg(C₂H₅)₂, Mg(i-C₄H₉)₂, ClMg(C₂H₅), Mg(C₆H₁₃)₂, Mg(C₈H₁₇)₂, Zn(C₂H₅)₂, Zn(i-C₄H₉)₂, ClZn(C₂H₅) et Zn(C₃H₇)₂.

On peut encore utiliser, à titre d'organométallique, un mélange d'un ou plusieurs desdits composés hydrocarbylmagnésium avec un ou plusieurs desdits composés hydrocarbylzinc et/ou un ou plusieurs desdits composés hydrocarbylaluminium, notamment des mélanges d'un composé alcoylaluminium et d'un composé alcoylmagnésium ayant les formules précitées.

Un donneur d'électrons consistant en au moins une base de LEWIS peut être également utilisé dans la préparation de la suspension du solide catalytique de type Ziegler non supporté ou supporté ou de la composante solide de métal de transition supportée. Le donneur d'électrons peut être avantageusement choisi parmi les esters alcoyliques d'acides carboxyliques aliphatiques ou aromatiques, notamment formiate de méthyle, paratoluate de méthyle, benzoate d'éthyle, phtalate de butyle, phtalate d'éthyle, phtalate d'octyle, acétate d'éthyle ou de butyle, les ethers aliphatiques ou cycliques, par exemple ether éthylique, éther di-isoamylique, tétrahydrofuranne, dioxanne, les cétones, en particulier acétone, méthylisobutylcétone, les esters vinyliques tels que l'acétate de vinyle, les dérivés acryliques et en particulier les acrylates ou méthacrylates d'alcoyle et notamment méthacrylate de méthyle, dérivés organiques du silicium tels que silanes comme phényltriéthoxysilane, diphényldiméthoxysilane, et cyclohexylméthyldiméthoxysilane.

Le liquide inerte utilisé pour le lavage du solide issu de la filtration de la suspension est choisi avantageusement parmi les hydrocarbures liquides et consiste en particulier en un ou plusieurs hydrocarbures aliphatiques tels que n-hexane, n-heptane, ou encore isopentane.

Le gaz inerte, que l'on emploie pour sécher le solide filtré et lavé, peut être choisi parmi les divers gaz sans action sur ledit solide, par exemple azote, gaz rares et mélanges de tels gaz.

A l'issue du séchage du solide catalytique de type Ziegler et avant son évacuation hors du réacteur pivotant, on peut encore mettre ledit solide séché ou remis en suspension en contact avec une quantité contrôlée d'une ou plusieurs alpha-oléfines en C₂ à C₁₂, par exemple éthylène, propylène, butène-1, injectée en un point quelconque du réacteur pour former un prépolymère enrobant les particules de solide catalytique de manière à produire un solide hydrocarboné actif pour polymériser les alpha-oléfines. Cette polymérisation contrôlée est réalisée en phase gazeuse ou en suspension dans le réacteur pivotant, à une température inférieure au point de fusion du solide hydrocarboné à préparer avec utilisation d'une quantité d'alpha-oléfine(s) telle que la proportion de solide hydrocarboné actif représente moins de 200 g par gramme de solide catalytique.

Lorsque le solide produit par le procédé selon l'invention a été préparé en l'absence de composé organométallique d'un métal des groupes I à III du Tableau Périodique des Eléments, on associe ultérieurement un tel composé organométallique au solide préparé selon l'invention pour constituer le solide catalytique de type Ziegler utilisable pour la polymérisation des alpha-oléfines. Le composé organométallique ainsi utilisé, qui peut être couplé à un donneur d'électrons tel que défini précédemment, est également choisi parmi les composés organométalliques, notamment hydrocarbylaluminium ou/et hydrocarbylmagnésium, mentionnés précédemment.

Dans le solide catalytique de type Ziegler produit selon l'invention, le rapport du nombre d'atomes du ou des métaux des groupes I à III du Tableau Périodique des Eléments au nombre d'atomes de métal de transition est comparable à celui présenté par les solides catalytiques correspondants préparés de manière conventionnelle et peut ainsi prendre, par exemple, des valeurs inférieures à 200.

D'autres avantages et caractéristiques de l'invention apparaîtront à la lecture de la description suivante d'un mode de mise en oeuvre de cette invention donné à titre illustratif et non limitatif en se référant au dessin annexé sur lequel:
- les figures 1a, 1b et 1c représentent schématiquement, en coupe, un réacteur pivotant utilisé selon l'invention en position basse (figure 1a) correspondant à une phase de réaction, en position haute (figure 1b) correspondant à une phase de filtration, lavage ou séchage et en position intermédiaire inclinée (figure 1c) correspondant à une phase d'évacuation du produit séché, et
- la figure 2 représente schématiquement une coupe axiale du système d'entraînement magnétique de l'agitateur équipant le réacteur pivotant des figures 1a, 1b et 1c.

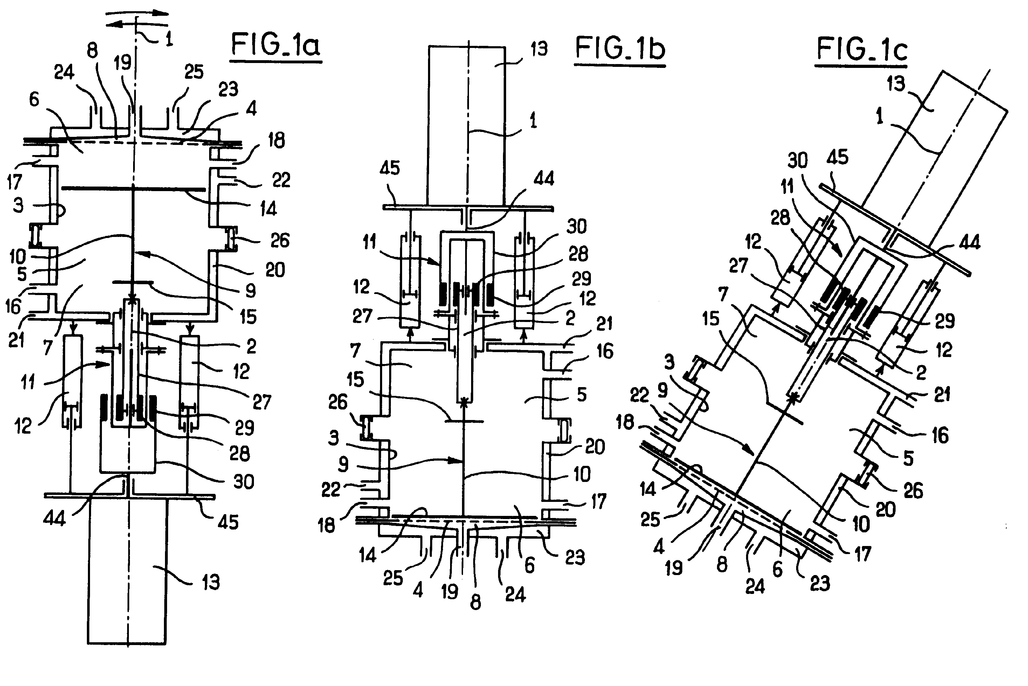

En se référant aux figures 1a, 1b et 1c, le réacteur pivotant polyfonctionnel utilisé dans le procédé selon l'invention présente un axe longitudinal 1 et est susceptible de pivoter autour d'un axe 2 rencontrant perpendiculairement cet axe longitudinal. Ledit réacteur comprend une enceinte 3 symétrique par rapport à l'axe 1 du réacteur et divisée, par une plaque filtrante 4 disposée perpendiculairement à l'axe du réacteur, en une zone primaire 5 de forme cylindrique, qui comprend un espace 6 de filtration adjacent à la plaque filtrante et un espace 7 de réaction à l'opposé de cette plaque, et en une zone secondaire 8 de forme préférentiellement conique et de plus faible volume que la zone primaire. La zone primaire 5 de l'enceinte 3 est pourvue d'un agitateur 9 comprenant une tige 10, dont l'axe coincide avec l'axe 1 longitudinal du réacteur et qui est susceptible d'être entraînée, d'une part, en translation et, d'autre part, en rotation par un système d'entraînement magnétique 11 associé à des vérins 12 et à un moteur 13 et dont la description sera donnée en détail plus loin, un mobile raclant 14 monté à l'extrémité de la tige 10 du côté de la plaque filtrante et perpendiculairement à ladite tige, ledit mobile raclant ayant une course contrôlée en translation pour agir dans l'espace de filtration à une distance plus ou moins proche de la plaque filtrante, et un mobile 15 d'agitation monté sur la tige 10 perpendiculairement à cette dernière et de manière à agir dans l'espace 7 de réaction. La zone primaire comporte, en outre, un orifice 16 d'amenée et d'évacuation de réactifs s'ouvrant dans l'espace 7 de réaction et plusieurs orifices positionnés radialement en 17 et 18 d'amenée et d'évacuation de réactifs et d'évacuation de produit synthétisé, lesdits orifices s'ouvrant chacun dans l'espace 6 de filtration au voisinage de la plaque filtrante 4 et ayant chacun un axe rencontrant l'axe 1 du réacteur perpendiculairement à l'axe 2 de pivotement dudit réacteur. La zone secondaire 8 de l'enceinte 3 comporte un orifice 19 pour l'évacuation ou l'injection d'un fluide liquide ou gazeux. La zone primaire 5 de l'enceinte 3 est munie d'une double-enveloppe 20 pour la circulation d'un fluide caloporteur, cette double-enveloppe étant équipée de conduits 21 et 22 respectivement pour l'amenée et l'évacuation du fluide caloporteur la traversant, tandis que la zone secondaire 8 de l'enceinte 3 est pourvue d'une double-enveloppe 23 pour la circulation d'un fluide caloporteur, ladite double-enveloppe étant équipée de conduits 24 et 25 respectivement pour l'amenée et l'évacuation du fluide caloporteur la parcourant. La circulation d'un fluide caloporteur ayant la température appropriée dans les doubles-enveloppes 20 et 23 permet de maintenir la température dans l'enceinte 3 à la valeur désirée. Les débits de fluide caloporteur circulant dans les doubles-enveloppes 20 et 23 sont ajustés en réponse aux indications fournies par un capteur de température, non représenté, monté dans l'enceinte 3. Ladite enceinte comporte également un capteur de pression, monté sur sa paroi et non représenté, ainsi que des hublots 26 d'examen de l'intérieur de l'enceinte qui traversent chacun de manière étanche la double-enveloppe 20 de ladite enceinte.

Le système 11 d'entraînement magnétique de l'agitateur 9 comporte un arbre tubulaire 27, dont l'axe coincide avec l'axe longitudinal 1 du réacteur et qui présente une extrémité reliée à la tige 10 de l'agitateur 9 et l'autre extrémité pourvue d'une masselotte annulaire magnétique 28, ladite masselotte 28 coopérant avec une masselotte annulaire magnétique 29 l'entourant et faisant partie d'un rotor d'entraînement 30 actionné en rotation par le moteur 13 et en translation par les vérins 12.

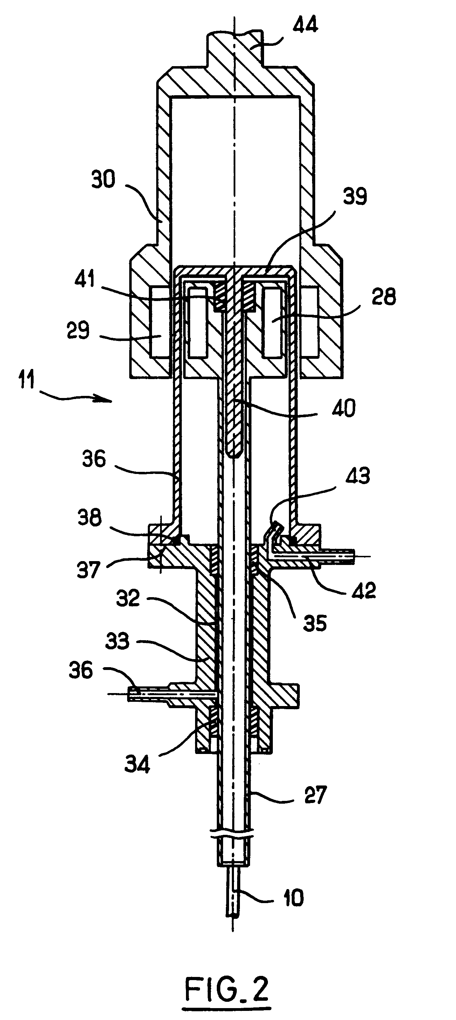

Comme représenté plus en détail sur la figure 2, l'arbre tubulaire 27, qui est relié à l'une de ses extrémités à la tige 10 de l'agitateur 9 et comporte à l'autre extrémité la masselotte annulaire magnétique 28, présente une partie intermédiaire coulissant de manière étanche dans un alésage cylindrique 32 pratiqué dans une colonne de guidage 33 fixée sur le réacteur pivotant du côté de l'espace 7 de réaction de la zone primaire 5. Le coulissement étanche de l'arbre tubulaire dans l'alésage 32 est par exemple assuré par deux paliers 34 et 35 en matériau autolubrifiant, par exemple en polytétrafluoroéthylène chargé de graphite ou de fibres de verre, qui sont montés chacun dans un logement pratiqué à chacune des extrémités de l'alésage 32 de la colonne de guidage 33 et enserrent l'arbre tubulaire 27. La colonne de guidage est également pourvue d'un embout 36 présentant un percement qui débouche à l'intérieur de l'alésage 32 entre les paliers 34 et 35, cet embout, facultatif, permettant d'injecter, si besoin est, un liquide de nettoyage dans l'alésage 32 ou de pressuriser ce dernier par un gaz inerte. Un chapeau guide 36, de forme cylindrique et, de préférence, à fond 39 plat, est monté de manière étanche à l'extrémité libre 37 de la colonne de guidage, l'étanchéité étant assurée avantageusement par un joint torique 38. Le chapeau guide 36 coiffe la masselotte annulaire magnétique 28 et présente, solidaire de son fond 39, une tige cylindrique 40 de guidage coaxiale à l'arbre tubulaire 27 et sur laquelle ledit arbre coulisse de manière étanche, ledit coulissement étanche étant assuré avantageusement par un palier 41 en un matériau autolubrifiant, par exemple polytétrafluoroéthylène chargé de graphite ou de fibres de verre, qui est monté dans un logement pratiqué dans la masselotte magnétique 28 à l'extrémité de l'arbre tubulaire 27 et qui enserre ledit arbre tubulaire. La hauteur de la partie cylindrique du chapeau 36, qui détermine le déplacement en translation de la masselotte 28 et en conséquence celui de l'agitateur 9, est choisie pour que ledit déplacement permette le déplacement en translation désiré du mobile raclant 14 dans l'espace de filtration 6 de la zone primaire 5. Au voisinage de son extrémité libre 37, la colonne de guidage 33 présente un percement 42 qui débouche par un embout 43 à l'intérieur du chapeau guide 36, ce percement, facultatif mais préféré, permettant, si besoin est, d'injecter un liquide de refroidissement ou un liquide de nettoyage dans le chapeau 36. Ledit chapeau est coiffé à son tour par un rotor d'entraînement 30 qui comporte une masselotte annulaire magnétique externe 29 entourant ledit chapeau de manière à coopérer magnétiquement avec la masselotte annulaire magnétique 28 avec comme résultat qu'une rotation, respectivement une translation, du rotor 30 entraîne une rotation, respectivement une translation, de la masselotte magnétique 28 solidaire de l'arbre tubulaire 27 et par conséquent une rotation, respectivement une translation, de l'agitateur 9. Le rotor 30 est associé à des moyens assurant, d'une part, son déplacement en translation et, d'autre part, son entraînement en rotation, ledit déplacement en translation étant choisi pour correspondre à la course possible de la masselotte 28 dans le chapeau 36. Ainsi comme schématisé sur les figures 1a, 1b et 1c, les moyens assurant le déplacement en translation du rotor 30 et son entraînement en rotation consistent avantageusement en un moteur 13 entraînant en rotation un arbre 44 solidaire du rotor 30 et coaxial à l'axe du réacteur, ledit moteur étant monté sur une plaque support 45 supportée elle-même par des vérins 12, d'axe parallèle à l'axe du réacteur, fixés au réacteur pivotant du même côté que la colonne de guidage 33, ces vérins assurant le déplacement en translation de la plaque 45, traversée par l'arbre 44 solidaire du rotor 30, et par conséquent le déplacement en translation du rotor 30 solidaire, par l'arbre 44, du moteur 13 monté sur cette plaque.

Par pivotement autour de l'axe 2 dans le sens des flêches, le réacteur peut être placé en position, dite position basse (figure 1a), pour laquelle l'axe 1 du réacteur est vertical et la zone secondaire 8 de l'enceinte 3 se trouve au-dessus de la zone primaire 5, l'espace de réaction 7 se trouvant alors en fond de l'enceinte 3. A partir de cette position, par pivotement de 180° autour de l'axe 2, on fait passer le réacteur en position, dite position haute (figure 1b), pour laquelle l'axe 1 du réacteur est toujours vertical mais la zone primaire 5 de l'enceinte 3 est au-dessus de la zone secondaire 8, l'espace de filtration 6 se trouvant alors en fond de la zone primaire 5. A partir de cette position, par pivotement de l'angle approprié, par exemple environ 45°, autour de l'axe 2, on fait passer le réacteur dans une position inclinée (figure 1c) appropriée pour évacuer le produit synthétisé hors du réacteur par le conduit 17 ou 18 suivant le cas (conduit 17 dans le cas de la figure 1c).

Les diverses mises en contact des ingrédients précurseurs du solide catalytique de type Ziegler ou de la composante de métal de transition supportée du solide catalytique de type Ziegler supporté sont réalisées dans l'espace 7 de réaction de la zone primaire 5 alors que le réacteur est en position basse, la position de l'agitateur 9 par rapport à la plaque filtrante 4 étant ajustée, par action sur les vérins 12, pour que le mobile rotatif 15 dudit agitateur agisse dans l'espace 7 de réaction.

Les opérations de filtration de la suspension solide produite au cours de chacune des mises en contact précitées et de séchage du solide filtré et lavé et certaines des opérations de lavage de la suspension sont réalisées dans l'espace 6 de filtration de la zone primaire 5 alors que le réacteur est en position haute, la position de l'agitateur 9 par rapport à la plaque filtrante 4 étant ajustée, par action sur les vérins 12, pour que le mobile raclant 14 dudit agitateur ait une action de lissage ou pénètre de la manière désirée dans le gâteau du solide en cours de filtration ou de lavage ou dans le solide en cours de séchage pour éviter l'agglomération des particules solides ou les passages préférentiels de gaz.

Le produit synthétisé est évacué du réacteur par le conduit 17, sous la forme d'une masse pulvérulente ou particulaire sèche, après avoir fait passer le réacteur de la position haute à la position inclinée appropriée.

Pour compléter la description, qui vient d'être fournie, on donne ci-après, à titre non limitatif, deux exemples concrets de synthèse selon l'invention comparés à deux synthèses correspondantes réalisées de manière conventionnelle.

### EXEMPLE 1:

On effectuait la synthèse d'une composante de métal de transition supportée sur MgCl₂ en opérant selon l'invention (Essai 1.A) ou selon la technique antérieure (Essai 1.B).

### Essai 1. A :

On opérait dans un réacteur pivotant similaire à celui représenté sur les figures 1a, 1b et 1c et pour lequel la zone primaire 5 de forme cylindrique avait un volume de 20 l et un rapport de la hauteur au diamètre égal à 1,6, tandis que la plaque filtrante 4 présentait une maillage de 20 µm. Le mobile d'agitation 15 de l'agitateur 9 avait la forme d'une hélice à pale mince de type tripale possédant un diamètre de 150 mm, tandis que le mobile raclant 14 dudit agitateur était un mobile raclant à deux pales, par exemple du type de celui fabriqué par la société GUEDU. Le mobile raclant pouvait opérer dans l'espace 6 de filtration entre le plan de la plaque filtrante 4 et un plan parallèle au plan de ladite plaque distant de 100 mm de cette plaque, tandis que le mobile d'agitation pouvait opérer dans l'espace 7 de réaction entre le fond dudit espace, réacteur en position basse, et un plan parallèle au fond de l'espace 7 de réaction et distant de 100 mm de ce fond.

La synthèse se déroulait comme indiqué ci-après:
a) - Le réacteur pivotant, purgé à l'azote, était placé en position basse (figure 1a) et maintenu à une température de 55°C, par circulation d'un fluide caloporteur dans les doubles-enveloppes 20 et 23, et sous agitation correspondant à une vitesse de rotation de l'agitateur égale à 150 tours/minute.

Par le conduit 16 dudit réacteur on introduisait, dans l'espace 7 de réaction, 2390 g d'hexane, 13,5 moles de butyléthylmagnésium à 30% dans l'heptane et 0,53 mole d'éther diisoamylique.

Après 1,5 heure d'agitation on injectait par le conduit 16, à l'aide d'une pompe, un mélange de 4,83 moles d'éther diisoamylique et de 35,1 moles de chlorure de tertiobutyle, l'injection dudit mélange étant réalisée en trois heures sous une agitation correspondant à une vitesse de rotation de l'agitateur 9 égale à 200 tours/minute.

A l'issue de ces opérations, l'espace 7 de réaction du réacteur renfermait une suspension d'un solide à base de MgCl₂ dans l'hexane.
b) - Le réacteur pivotant était ensuite basculé en position haute (figure 1b) pour effectuer la filtration de la suspension, l'agitation étant arrêtée. Le gâteau de filtration essoré était remis en suspension par addition de 6000 g d'hexane dans l'espace 6 de filtration par le conduit 18 et remise en route de l'agitation pour atteindre une vitesse de rotation de l'agitateur 9 égale à 150 tours/minute.
c) - Le réacteur pivotant était ensuite replacé en position basse et, tout en maintenant l'agitation définie sous b), on injectait dans la zone primaire 5 du réacteur une quantité d'HCl gazeux conduisant à une pression partielle d'HCl gazeux dans l'enceinte 3 du réacteur égale à 500 mbars et poursuivait l'agitation pendant 1 heure. L'enceinte 3 du réacteur était alors dégazée par décompression et un bullage d'azote était ensuite effectué dans la suspension contenue dans l'espace 7 de réaction pour éliminer l'HCl n'ayant pas réagi.
d) - Le réacteur pivotant était à nouveau basculé en position haute pour effectuer la filtration de la suspension, l'agitation étant arrêtée. A l'issue de cette filtration, on effectuait deux lavages du gâteau de filtration avec chaque fois 4000 g d'hexane ajoutés par le conduit 18. Le gâteau lavé était ensuite remis en suspension par addition de 4000 g d'hexane dans l'espace 6 de filtration, par le conduit 18, et remise en marche de l'agitation pour atteindre une vitesse de rotation de l'agitateur égale à 150 tours/minute.
e) - Le réacteur était ensuite basculé en position basse et sa température était amenée à la valeur 80°C. Tout en maintenant l'agitation définie sous d) et la température de 80°C, on injectait dans l'espace 7 de réaction de la zone primaire 5 du réacteur, 10 5 moles de TiCl₄ sur une durée de 2 heures.
f) - Le réacteur était alors amené en position haute et refroidi à 40°C pour effectuer la filtration de la suspension contenue dans la zone primaire 5 dudit réacteur. A l'issue de cette filtration, on effectuait quatre lavages du gâteau de filtration avec chaque fois 6000 g d'hexane ajoutés par le conduit 18. Le gâteau lavé était ensuite séché. Pour ce faire le mobile raclant 14 de l'agitateur 9 était positionné pour pénétrer dans le gâteau et la vitesse de rotation de l'agitateur 9 était réglée à la valeur 60 tours/minute. En même temps, on injectait un courant d'azote par le conduit 19 de la zone secondaire 8 pour réaliser une fluidisation des particules solides du gâteau et ainsi effectuer un entraînement du solvant résiduel par le courant d'azote, de manière à obtenir un solide pulvérulent sec.
g) - Le réacteur était enfin amené dans la position inclinée schématisée sur la figure 1c pour soutirer le produit pulvérulent sec contenu dans l'espace 6 de filtration.

On recueillait 1410 g de poudre sèche de composante de métal de transition supportée ayant un diamètre moyen de particule de 45 µm. Pour réaliser les diverses opérations décrites ci-dessus, on a employé un volume total d'hexane égal à 67,25 l.

### Essai 1. B (comparatif)

On opérait dans un appareillage conventionnel comportant un réacteur de précipitation de forme cylindrique à fond arrondi, ayant une capacité de 20 l et équipé d'un agitateur à hélice tripale, et un filtre sécheur agité de 40 l connecté en série avec le réacteur de précipitation.

La synthèse se déroulait comme indiqué ci-après:
a) - On effectuait la précipitation du support de MgCl₂ sous la forme d'une suspension dans l'hexane en opérant dans le réacteur agité dans les mêmes conditions que celles définies dans l'étape a) de l'essai 1.A.
b) - On transférait la suspension vers le filtre sécheur agité par siphonage et rinçait le réacteur avec 2040 g d'hexane, qui étaient ensuite transférés par siphonage vers le filtre sécheur.
   Après filtration, le gâteau essoré était remis en suspension, sous agitation, par addition de 6000 g d'hexane et la suspension obtenue était alors transférée vers le réacteur. Le filtre était nettoyé avec 8 litres de solvant, qui étaient ensuite mis aux rejets.
c) - La suspension contenue dans le réacteur était traitée par HCl gazeux comme indiqué dans l'étape c) de l'essai 1. A.
d) - La suspension traitée par HCl était transférée vers le filtre sécheur. Le réacteur était alors rincé avec 2640 g d'hexane qui étaient également transférés par siphonage vers le filtre sécheur.
   Après filtration, le gâteau essoré était lavé deux fois, puis remis en suspension comme indiqué dans l'étape d) de l'essai 1. A.
   La suspension était alors transférée par siphonage vers le réacteur, puis le filtre sécheur était nettoyé avec 8 litres de solvant, qui étaient ensuite mis aux rejets.
e) - La suspension présente dans le réacteur était traitée par TiCl₄ comme indiqué dans l'étape e) de l'essai 1.A.
f) - La suspension résultant du traitement par TiCl₄ était transférée vers le filtre sécheur par siphonage puis l'espace de réaction était rincé avec 2500 g d'hexane transférés ensuite vers le filtre sécheur, ladite suspension étant traitée dans le filtre sécheur (filtration, lavage et séchage) comme indiqué dans l'étape f de l'essai 1. A.
g) - Le solide séché, sous forme pulvérulente, était recueilli sous azote dans une capacité maintenue sous azote, le transfert étant réalisé en faisant tourner la pale d'agitation du filtre sécheur avec une vitesse de 60 tours/minute.

On recueillait 1290 g de poudre sèche de composante de métal de transition supportée ayant un diamètre moyen de particule de 42 µm. Pour réaliser les diverses opérations ci-dessus, on a employé un volume total de solvant de 102,4 l. En outre, cinq transferts de suspension hors du réacteur et vers le réacteur ont été néessaires au cours de la synthèse.

### EXEMPLE 2 :

On effectuait la synthèse d'une composante solide de métal de transition supportée sur silice en opérant selon l'invention (Essai 2. A) ou selon l'art antérieur (Essai 2. B).

### Essai 2. A :

On opérait dans un réacteur pivotant similaire à celui utilisé dans l'essai 1. A, la synthèse se déroulant comme suit:
a) - Le réacteur pivotant, purgé à l'azote, était placé en position basse (figure 1a) et maintenu à une température de 20°C par circulation d'un fluide caloporteur dans les doubles-enveloppes 20 et 23. Par le conduit 16 dudit réacteur on introduisait, dans l'espace 7 de réaction, 2000 g de gel de silice en poudre exempt d'eau, 8 litres d'hexane et 3 moles d'hexaméthyldisilazane. Le contenu de l'espace 7 de réaction était alors porté à 55°C et agité à cette température pendant 1 heure avec une vitesse de rotation de l'agitateur 9 égale à 150 tours/minute.
b) - A l'issue de l'opération a) le réacteur était basculé en position haute (figure 1b) pour effectuer la filtration de la suspension, l'agitation étant arrêtée. Le gâteau de filtration était lavé deux fois à l'hexane en utilisant à chaque fois 5 litres d'hexane injecté dans l'espace de filtration par le conduit 18, puis soumis à un séchage par fluidisation à 55°C par injection d'un courant d'azote à température appropriée par le conduit 19 de la zone secondaire 8.
c) - Le réacteur était remis en position basse et dans l'espace 7 de réaction maintenu à 55°C sous une agitation de 150 tours/minute, on introduisait, par le conduit 16, 8,36 moles de n-butyl sec-butyl magnésium et 2,09 moles de triisobutylaluminoxane en solution à 20% dans l'heptane.
   La suspension était maintenue pendant 1 heure dans les conditions de température et d'agitation précitée, après quoi le réacteur était refroidi à 20°C.
d) - Le réacteur était alors basculé en position haute aux fins de filtration de la suspension refroidie à 20°C. Le gâteau de filtration était ensuite remis en suspension, sous agitation de 150 tours/minute, dans 8 litres d'hexane introduits par le conduit 18.
e) - Le réacteur était à nouveau placé en position basse et, tout en maintenant les conditions de température et d'agitation de l'étape d), on injectait, dans la zone primaire 5,20 moles d'HCl gazeux sur une durée de 1,5 heure. Après dégazage de l'enceinte 3 du réacteur par décompression, l'HCl n'ayant pas réagi était ensuite éliminé par bullage d'azote dans la suspension traitée par HCl.
f) - Le réacteur étant toujours en position basse et son contenu étant maintenu à 55°C sous une agitation de 150 tours/minute, on introduisait dans l'espace 7 de réaction, par le conduit 16, une quantité de TiCl₄ représentant 5,5 moles, cette opération étant réalisée sur une durée égale à 1 heure.
g) - Le réacteur était basculé en position haute aux fins de filtration de la suspension traitée par TiCl₄, ladite filtration étant réalisée à 40°C. A l'issue de cette filtration on effectuait deux lavages du gâteau de filtration avec chaque fois 5 litres d'hexane ajoutés par le conduit 18. Après la filtration consécutive au dernier lavage, le gâteau de filtration était ensuite séché. Pour ce faire le mobile raclant 14 de l'agitateur 9 était positionné pour pénétrer dans le gâteau et la vitesse de rotation de l'agitateur 9 était ajustée à la valeur 60 tours/minute. En même temps, on injectait un courant d'azote par le conduit 19 de la zone secondaire 8 pour réaliser une fluidisation des particules solides du gâteau et ainsi effectuer un entraînement du solvant résiduel par le courant d'azote, de manière à obtenir un solide pulvérulent sec.
h) - Le réacteur était enfin amené dans la position inclinée schématisée sur la figure 1c aux fins de soutirage du produit pulvérulent sec contenu dans l'espace de filtration 6.

On recueillait 3310 g de poudre sèche de composante de métal de transition supportée dans une capacité maintenue sous azote. Pour réaliser les diverses opérations décrites ci-dessus, on a utilisé un volume total d'hexane égal à 36 litres.

### Essai 2. B (comparatif)

On opérait dans un appareillage conventionnel similaire à celui utilisé dans l'essai 1. B, la synthèse se déroulant comme suit:
a) - On effectuait le traitement du support de silice en opérant dans le réacteur agité conventionnel dans les mêmes conditions que celles utilisées dans l'étape a) de l'essai 2. A.
b) - La suspension de silice traitée était transférée vers le filtre sécheur par siphonage et l'on rinçait le réacteur avec 4 litres d'hexane, qui étaient ensuite transférés par siphonage vers le filtre sécheur.
   Après filtration, le gâteau essoré était lavé deux fois à l'hexane en utilisant chaque fois 5 litres d'hexane, puis soumis à un séchage par fluidisation à 55°C par injection d'un courant d'azote de température appropriée dans le filtre sécheur. Le produit sec obtenu, se présentant sous la forme d'une poudre, était soutiré dans une capacité maintenue sous azote, ladite capacité étant ensuite connectée au réacteur pour introduire la poudre dans ce dernier par gravité. Le filtre était ensuite lavé avec 8 litres d'hexane, qui étaient ensuite envoyés aux rejets.
c) - Au contenu du réacteur on ajoutait les ingrédients utilisés dans l'étape c) de l'essai 2. A, en opérant dans les conditions de température et d'agitation prévues dans ladite étape, puis l'on maintenait la suspension formée pendant 1 heure dans lesdites conditions de température et d'agitation, après quoi le réacteur était refroidi à 20°C.
d) - On transférait la suspension vers le filtre sécheur par siphonage et rinçait le réacteur avec 4 litres d'hexane, qui étaient ensuite transférés par siphonage vers le filtre sécheur.
   Après filtration, le gâteau essoré était remis en suspension dans 8 litres d'hexane, en opérant sous agitation et la suspension formée était transférée par siphonage vers le réacteur. Le filtre était nettoyé par lavage avec 8 litres de solvant, qui étaient mis ensuite aux rejets.
e) - La suspension contenue dans le réacteur était traitée par HCl gazeux comme indiqué dans l'étape e) de l'essai 2. A.
f) - La suspension traitée par HCl était soumise au traitement par TiCl₄ comme indiqué dans l'étape f) de l'essai 2. A.
g) - La suspension traitée par TiCl₄ était transférée par siphonage vers le filtre sécheur et le réacteur était ensuite rincé avec 4 litres d'hexane qui étaient également transférés après utilisation vers le filtre sécheur. La suspension était traitée dans le filtre sécheur (filtration, lavage et séchage) dans des conditions comparables à celles utilisées dans l'étape g) de l'essai 2. A.
h) - Le solide séché, sous forme pulvérulente, était recueilli sous azote dans une capacité maintenue sous azote, le transfert étant réalisé en faisant tourner la pale d'agitation du filtre sécheur avec une vitesse de 60 tours/minute.

On recueillait 3100 g de poudre sèche de composante de métal de transition supportée. Pour réaliser les diverses opérations de cet essai, on a employé un volume total de solvant égal à 64 l. En outre, pour la mise en oeuvre de cette synthèse, un transfert de poudre sèche et quatre transferts de suspension se sont avérés nécessaires.

## Revendications

1. Procédé de synthèse d'un solide catalytique de type Ziegler ou d'une composante solide de métal de transition d'un tel catalyseur, ledit procédé étant du type dans lequel on produit tout d'abord ledit solide catalytique ou sa composante sous la forme d'une suspension dans un milieu liquide inerte par mise en contact des ingrédients précurseurs dudit solide catalytique ou de ladite composante dans ledit milieu liquide, en réalisant cette mise en contact en une seule étape ou bien en plusieurs étapes séparées l'une de la suivante, si besoin est, par une filtration et éventuellement par un lavage du résidu solide de filtration et/ou un séchage dudit résidu lavé, puis on soumet la suspension du solide catalytique ou de la composante à une filtration, on lave le solide issu de la filtration une ou plusieurs fois à l'aide d'un liquide inerte aux fins de purification, on recueille la suspension ou, de préférence, on sèche le solide lavé et recueille le solide séché, le solide en suspension ou séché recueilli constituant ledit solide catalytique de type Ziegler ou ladite composante solide de métal de transition, et se caractérisant en ce que l'on opère dans un réacteur polyfonctionnel unique présentant un axe longitudinal et susceptible de pivoter autour d'un axe coupant perpendiculairement cet axe longitudinal, ledit réacteur comprenant une enceinte, à température réglable, symétrique par rapport à l'axe longitudinal du réacteur et divisée, par une plaque filtrante disposée perpendiculairement à l'axe du réacteur, en une zone primaire, qui comprend un espace de filtration adjacent à la plaque filtrante et un espace de réaction à l'opposé de cette plaque, et une zone secondaire de plus faible volume que la zone primaire, ladite zone primaire étant pourvue, d'une part, d'un moyen d'agitation, notamment moyen de raclage, rotatif proche de la plaque filtrante et agissant dans l'espace de filtration et d'un moyen d'agitation rotatif agissant dans l'espace de réaction et, d'autre part, d'au moins un orifice d'amenée et d'évacuation des réactifs s'ouvrant dans l'espace de réaction de la zone primaire et d'au moins un orifice d'amenée et d'évacuation de réactifs et de produit synthétisé s'ouvrant dans l'espace de filtration au voisinage de la plaque filtrante et dont l'axe rencontre l'axe longitudinal du réacteur perpendiculairement à l'axe de pivotement dudit réacteur, tandis que la zone secondaire comporte au moins un orifice pour l'évacuation et l'injection d'un fluide, ledit réacteur étant susceptible de pivoter de 180°, autour de son axe de pivotement, pour passer d'une position, dite position basse, pour laquelle l'axe du réacteur est vertical et la zone secondaire de l'enceinte se trouve au-dessus de la zone primaire à une position, dite position haute, pour laquelle l'axe du réacteur est vertical et la zone primaire de l'enceinte est située au-dessus de la zone secondaire, et d'occuper également des positions intermédiaires inclinées sur la verticale, et en ce que chacune des étapes de mise en contact d'ingrédients précurseurs dudit solide catalytique ou de ladite composante solide conduisant à l'obtention d'une suspension d'un produit solide dans un milieu liquide inerte ainsi que certaines des opérations de lavage de la suspension sont réalisées dans l'espace de réaction de la zone primaire alors que le réacteur est en position basse, tandis que chacune des opérations de filtration et de séchage et certaines des opérations de lavage sont réalisées dans l'espace de filtration de la zone primaire alors que le réacteur est en position haute, les filtrats et liquides de lavage étant évacués par l'orifice de la zone secondaire, tandis que le séchage du solide filtré et lavé est réalisé de toute manière appropriée et, de préférence, au moyen d'un gaz inerte injecté dans le réacteur par l'orifice de la zone secondaire, le solide en suspension ou séché étant soutiré du réacteur par l'orifice situé dans la zone primaire au voisinage de la plaque filtrante après avoir incliné le réacteur, par pivotement dans une position appropriée pour ce soutirage.

2. Procédé selon la revendication 1, caractérisé en ce que l'on prépare un solide catalytique de type Ziegler non supporté en faisant réagir, dans un milieu liquide inerte, au moins un composé de métal de transition des groupes IV à VIII du Tableau Périodique des Eléments avec au moins un composé organométallique d'un métal des groupes I à III dudit Tableau Périodique pour former un produit insoluble dans ledit milieu inerte.

3. Procédé selon la revendication 1, caractérisé en ce que l'on prépare un solide catalytique de type Ziegler supporté en mettant en contact, dans un milieu liquide inerte, un composé de métal de transition des groupes IV à VIII du Tableau Périodique des Eléments, un produit apte à constituer un support et un composé organométallique d'un métal des groupes I à III dudit Tableau Périodique des Eléments.

4. Procédé selon la revendication 3, caractérisé en ce que l'on met le composé de métal de transition avec le support, puis on met en contact le produit résultant avec le composé organométallique.

5. Procédé selon la revendication 4, caractérisé en ce que l'on forme le support à partir d'ingrédients précurseurs ou/et l'on soumet le support à un traitement de modification immédiatement avant sa mise en contact avec le composé de métal de transition ou au cours de ladite mise en contact.

6. Procédé selon la revendication 1, caractérisé en ce que l'on prépare une composante solide de métal de transition supportée par mise en contact, dans un milieu liquide inerte, d'un composé de métal de transition des groupes IV à VIII du Tableau Périodique des Eléments avec un composé apte à constituer un support, ledit support pouvant être formé à partir d'ingrédients précurseurs ou/et pouvant subir un traitement de modification immédiatement avant sa mise en contact avec le composé de métal de transition ou au cours de ladite mise en contact.

7. Procédé selon l' une des revendications 2 à 6, caractérisé en ce que le composé de métal de transition est un composé de titane, vanadium, chrome, zirconium ou hafnium.

8. Procédé selon l'une des revendications 3 à 7, caractérisé en ce que le support utilisé dans la préparation du solide catalytique supporté ou de la composante solide de métal de transition supportée est un composé solide de magnésium préformé ou préparé in situ tel que MgCl₂ utilisé seul ou en association avec un composé poreux d 'oxyde choisi parmi SiO₂, Al₂O₃, TiO₂, ZrO₂, zéolithes, oxydes mixtes renfermant SiO₂ et un ou plusieurs oxydes métalliques pris parmi ZrO₂, TiO₂, MgO et Al₂O₃ ou un produit organique polymérique ou non tel qu'un produit renfermant du silicium du type siloxane.

9. Procédé selon l'une des revendications 2 à 5, caractérisé en ce que le composé organométallique est choisi parmi l'isoprénylaluminium, les composés alumoxanes de formule 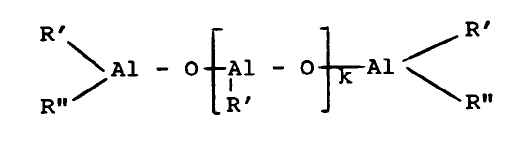 les alcoylaluminium de formule Al(R′)_{q}XᵣHₛ, les hydrocarbylmagnésium de formule YMgR′ et les hydrocarbylzinc de formule YZnR′, avec dans ces formules X étant Cl ou un radical monovalent OR′, Y représentant Cl ou R′, R′ étant un radical alcoyle en C₁ à C₁₆ et de préférence en C₁ à C₁₂, q, r et s étant des nombres tels que 1<q<3, 0<r<2 et 0<s<2 avec q+r+s=3, les R˝ désignant chacun un radical R′ ou formant ensemble un radical bivalent -O- et k est un entier allant de 0 à 18.

10. Procédé selon l'une des revendications 1 à 9, caractérisé en ce qu'un donneur d'électrons consistant en au moins une base de LEWIS est utilisé dans la préparation de la suspension du solide catalytique de type Ziegler ou de la composante solide de métal de transition supportée.

11. Procédé selon l'une des revendications 1 à 10, caractérisé en ce que le liquide inerte utilisé tant dans la préparation de la suspension du solide catalytique ou de la composante solide de métal de transition supportée que pour le lavage du solide issu de la filtration de la suspension est choisi parmi les hydrocarbures liquides et consiste en particulier en un ou plusieurs hydrocarbures aliphatiques.

12. Procédé selon l'une des revendications 2 à 5, caractérisé en ce qu'à l'issue du séchage du solide catalytique de type Ziegler et avant son soutirage hors du réacteur pivotant, on met le solide séché ou remis en suspension en contact avec une quantité contrôlée d'une ou plusieurs alpha-oléfines en C₂ à C₁₂, injectée en un point quelconque du réacteur pour former un prépolymère enrobant les particules de solide catalytique de manière à produire un solide hydrocarboné actif pour polymériser les alpha-oléfines.

13. Procédé selon l'une des revendications 1 à 12, caractérisé en ce que le mobile de préférence raclant et le mobile d'agitation présents dans la zone primaire du réacteur pivotant sont mobiles en translation selon l'axe du réacteur en plus d'être mobiles en rotation.

14. Système d'entraînement magnétique en rotation et en translation d'un agitateur équipant un réacteur, caractérisé en ce qu'il comprend un arbre tubulaire (27), qui est relié à l'une des ses extrémités à la tige (10) de l'agitateur (9) et comporte à l'autre extrémité une masselotte annulaire magnétique (28) et qui présente une partie intermédiaire coulissant de manière étanche dans un alésage cylindrique (32) pratiqué dans une colonne de guidage (33) fixée sur le réacteur, un chapeau guide (36) de forme cylindrique et monté de manière étanche à l'extrémité libre (37) de la colonne de guidage, ledit chapeau guide coiffant la masselotte annulaire magnétique (28) et présentant, solidaire de son fond (39), une tige cylindrique de guidage (40) coaxiale à l'arbre tubulaire (27) et sur laquelle ledit arbre coulisse de manière étanche et un rotor d'entraînement (30) qui coiffe le chapeau guide (36) et qui comporte une masselotte annulaire magnétique externe (29) entourant ledit chapeau guide de manière à coopérer magnétiquement avec la masselotte annulaire magnétique (28) pour qu'une rotation, respectivement une translation, du rotor (30) entraîne une rotation, respectivement une translation, de la masselotte magnétique (28) solidaire de l'arbre tubulaire (27) et par conséquent une rotation, respectivement une translation, de l'agitateur (9), ledit rotor (30) étant associé à des moyens assurant, d'une part, son déplacement en translation et, d'autre part, son entraînement en rotation.

15. Système selon la revendication 14, caractérisé en ce que les moyens assurant le déplacement en translation du rotor (30) et son entraînement en rotation consistent en un moteur (13) entraînant en rotation un arbre (44) solidaire du rotor (30) et coaxial à l'axe du réacteur, ledit moteur étant monté sur une plaque support (45) supportée elle-même par des vérins (12), d'axe parallèle à l'axe du réacteur, fixés au réacteur du même côté que la colonne de guidage (33), ces vérins assurant le déplacement en translation de la plaque (45), traversée par l'arbre (44) solidaire du rotor (30), et par conséquent le déplacement en translation du rotor (30) solidaire, par l'arbre (44), du moteur (13) monté sur ladite plaque.

16. Système selon la revendication 14 ou 15, caractérisé en ce que le coulissement étanche de l'arbre tubulaire (27) dans l'alésage (32) de la colonne de guidage (33) est assuré par deux paliers (34, 35) en matériau autolubrifiant, par exemple polytétrafluoroéthylène chargé de graphite ou de fibres de verre, qui sont montés chacun dans un logement pratiqué à chacune des extrémités de l'alésage (32) de la colonne de guidage et enserrent l'arbre tubulaire (27).

17. Système selon la revendication 16, caractérisé en ce que la colonne de guidage (33) est pourvue d'un embout (36) présentant un percement qui débouche à l'intérieur de l'alésage (32) entre les paliers (34, 35).

18. Système selon l'une des revendications 14 à 17, caractérisé en ce que, au voisinage de son extrémité libre (37), la colonne de guidage (33) présente un percement (42) débouchant par un embout (43) à l'intérieur du chapeau guide (36).

19. Système selon l'une des revendications 14 à 18, caractérisé en ce que le coulissement étanche de l'arbre tubulaire (27) sur la tige (40) solidaire du fond (39) de chapeau guide (36) est assuré par un palier (41) en un matériau autolubrifiant, par exemple polytétrafluoroéthylène chargé de graphite ou de fibres de verre, qui est monté dans un logement pratiqué dans la masselotte magnétique (28) à l'extrémité de l'arbre tubulaire (27) et qui enserre ledit arbre tubulaire.

20. Système selon l'une des revendications 14 à 19, caractérisé en ce que le déplacement en translation du rotor (30) est choisi pour correspondre à la course possible de la masselotte (28) dans le chapeau guide (36), ladite course correspondant au déplacement en translation de l'agitateur (9).

## Patentansprüche

1. Verfahren zur Synthese eines katalytischen Feststoffes vom Typ Ziegler oder eines festen Bestandteils eines solchen Katalysators aus Übergangsmetall. Dieses Verfahren ist ein solches, bei dem man zunächst den genannten katalytischen Feststoff oder sein Bestandteil in einem inerten flüssigen Medium durch in Kontakt bringen der Edukte des genannten katalytischen Feststoffes oder des genannten Bestandteils im genannten flüssigen Medium herstellt. Dieses in Kontakt bringen wird in einer Stufe oder auch in mehreren Stufen durchgeführt. Wenn es nötig ist, werden aufeinanderfolgende Stufen durch Filtration und gegebenenfalls durch Waschen des festen Rückstandes der Filtration und/ oder Trocknung dieses gewaschenen Rückstandes voneinander getrennt. Danach unterzieht man die Suspension des katalytischen Feststoffes oder des Bestandteils einer Filtration. Man wäscht den aus der Filtration erhaltenen Feststoff zwecks Reinigung ein- oder mehrmals mit Hilfe einer inerten Flüssigkeit. Man sammelt die Suspension oder bevorzugterweise trocknet man den gewaschenen Feststoff und sammelt den getrockneten Feststoff. Der suspendierte oder getrocknete gesammelte Feststoff stellt den genannten katalytischen Feststoff vom Typ Ziegler oder den genannten festen Bestandteil des Übergangsmetalls dar. Das Verfahren ist dadurch gekennzeichnet, daß man es in einem einzigartigen multifunktionalen Reaktor durchführt, der eine longitudinale Achse aufweist und um eine Achse, die senkrecht zu dieser longitudinalen Achse steht, drehbar ist. Der Reaktor besteht aus einem zur longitudinalen Achse symmetrischen Kessel mit regulierbarer Temperatur. Dieser ist durch eine senkrecht zur Reaktorachse angeordneten Filterplatte in eine Primärzone, die aus dem zur Filterplatte benachbarten Filtrationsraum und einem auf der anderen Seite der Platte liegenden Reaktionsraum besteht, und in eine Sekundärzone, deren Volumen viel kleiner als das der Primärzone ist, aufgeteilt. Zum einen ist die genannte Primärzone mit einer nahe der Filterplatte rotierenden und im Filterraum wirkenden Rührvorrichtung, besonders einer Schabvorrichtung, ausgestattet und mit einer im Reaktionsraum wirkenden Rührvorrichtung versehen. Zum anderen verfügt sie mindestens über einen in den Reaktionsraum der Primärzone führenden Einlaß- und Auslaßkanal für die Reaktanden, und ist mindestens mit einem in den zur Filterplatte benachbarten Filtrationsraum mündenden Zufluß- und Abflußkanal für die Reaktanden und für die Reaktionsprodukte ausgestattet. Die Achse der Filterplatte geht in die longitudinale Achse des Reaktors über und steht senkrecht zur Drehachse des Reaktors. Währendessen verfügt die Sekundärzone zumindesnt über einem Einlaß- und Auslabkanal zur Entnahme und zur Injizierung einer Flüssigkeit. Der genannte Reaktor kann um 180° um seine Drehachse gedreht werden, um aus der als tiefe Position bezeichneten Stellung, bei der die Reaktorachse vertikal steht und die Sekundärzone des Kessels sich oberhalb der Primärzone befindet, in die als hohe Position bezeichnete Stellung, bei der die Reaktorachse vertikal steht und die Primärzone des Kessels sich oberhalb der Sekundärzone befindet, überführt zu werden und um gegenüber der Vertikalen ebenso Positionszwischenstufen der Neigung anzunehmen. Und das Verfahren ist weiterhin dadurch gekennzeichnet, daß jede der Stufen, die die Edukte des katalytischen Feststoffes oder des genannten festen Bestandteils in Kontakt bringt, zur Gewinnung einer Suspension eines festen Produktes in einem inerten flüssigen Medium führt. Gleichwie gewisse Waschoperationen der Suspension im Reaktionsraum der Primärzone vorgenommen werden, während der Reaktor die tiefe Position innehat, werden alle Filtrations- und Trocknungsvorgänge und gewisse Waschoperationen hingegen im Filtrationsraum der Primärzone durchgeführt, während der Reaktor die hohe Position innehat. Die Filtrate und die Waschflüssigkeiten werden über einen Ablabkanal der Sekundärzone abgezogen. Hingegen wird der filtrierte und gewaschene Feststoff in zweckdienlicher Weise und bevorzugt mit Hilfe eines über den Einlaßkanal der Sekundärzone in den Reaktor injizierten inerten Gases getrocknet. Der suspensierte oder getrocknete Feststoff wird aus dem Reaktor über die in der Primärzone, in Nachbarschaft zur Filterplatte, befindliche Öffnung, nach vorheriger Neigung des Reaktors durch Drehen in eine zur Entleerung geeigneten Position, herausgelassen.

2. Verfahren nach Anspruch 1, dadurch gekennzeichnet, daß man ein nicht auf einen Träger aufgebrachten festen Katalysator vom Typ Ziegler in einem flüssigen Inertmedium herstellt. Es werden dazu mindestens eine Übergangsmetallverbindung der Gruppen IV bis VIII des Periodensystems der Elemente mit mindestens einer Organometallverbindung eines Metalls der Gruppen I bis III des genannten Periodensystems zur Reaktion gebracht, um ein in dem genannten inerten Medium unlösliches Produkt zu bilden.

3. Verfahren nach Anspruch 1, dadurch gekennzeichnet, daß man ein auf einen Träger aufgebrachten festen Katalysator vom Typ Ziegler in einem flüssigen Inertmedium herstellt, indem man eine Übergangsmetallverbindung der Gruppen IV bis VIII des Periodensystems der Elemente, ein geeignetes Produkt zur Bildung eines Trägermaterials und eine Organometallverbindung eines Metalls der Gruppen I bis III des genannten Periodensystems der Elemente in Kontakt bringt.

4. Verfahren nach Anspruch 3, dadurch gekennzeichnet, daß man die Übergangsmetallverbindung mit dem Trägermaterial verbindet, dann das erhaltene Produkt mit der Organometallverbindung zusammenbringt.

5. Verfahren nach Anspruch 4, dadurch gekennzeichnet, daß man ein Trägermaterial ausgehend von Edukten herstellt oder/und daß man das Trägermaterial einer sofortigen Modifizierung unterzieht, bevor es mit der Übergangsmetallverbindung in Kontakt gebracht wird oder während es in Kontakt gebracht wird.

6. Verfahren nach Anspruch 1, dadurch gekennzeichnet, daß man eine auf einem Träger aufgebrachte Übergangsmetallverbindung in einem Inertmedium herstellt, in dem man eine Übergangsmetallverbindung der Gruppen IV bis VIII des Periodensystems der Elemente mit einer zur Bildung eines Trägermaterials geeigneten Verbindung in Kontakt bringt. Dieses Trägermaterial kann ausgehend von Edukten hergestellt werden oder/und kann einer sofortigen Modifizierung unterworfen werden, bevor es mit der Übergangsmetallverbindung in Kontakt gebracht wird oder während es in Kontakt gebracht wird.

7. Verfahren nach einem der Ansprüche 2 bis 6, dadurch gekennzeichnet, daß die Übergangsmetallverbindung eine Titan-, Vanadium-, Chrom-, Zirkon-, oder Hafniumverbindung ist.

8. Verfahren nach einem der Ansprüche 3 bis 7, dadurch gekennzeichnet, daß das verwendete Trägermaterial zur Herstellung des katalytischen Trägerfeststoffes oder der festen Bestandteile des Übergangsmetallträgers eine vorher oder in situ hergestellte feste Magnesiumverbindung wie MgCl₂ ist, die allein oder zusammen mit einer porösen Oxidverbindung, darunter SiO₂, Al₂O₃, TiO₂, ZrO₂, Zeolithen, gemischten SiO₂-enthaltenden Oxiden und einem oder mehreren Metalloxiden, wie ZrO₂, TiO₂, MgO und Al₂O₃ oder einem organischen Produkt, polymer oder nicht, sowie ein Produkt, das Silicium vom Typ der Siloxane einschließt, eingesetzt wird.

9. Verfahren nach einem der Ansprüche 2 bis 5, dadurch gekennzeichnet, daß für die Organometallverbindung iso-Propylalan, Aluminooxanverbindungen der Formel 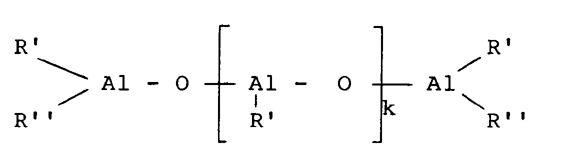 Alkylalane der Formel Al(R′)_{q}XᵣHₛ, Alkylmagnesiumverbindungen der Formel YM_{g}R′ oder Alkylzinkverbindungen der Formel YZnR′ gewählt wird, wobei in diesen Formeln X für Cl oder für einen einwertigen OR′-Substituenten steht, Y Cl oder R′ wiedergibt, R′ ein C₁ bis C₁₆, bevorzugterweise ein C₁ bis C₁₂-langer Alkylrest ist, q, r und s sind Zahlen, so daß 1<q<3, 0<r<2 und 0<s<2 mit q+r+s=3 sind, jedes R˝ steht für einen R′-Substituenten oder bilden gemeinsam einen zweiwertigen -O- Substituenten und k ist eine ganze Zahl, die die Werte von O bis 18 annimmt.

10. Verfahren nach einem der Ansprüche 1 bis 9, dadurch gekennzeichnet, daß ein Elektronendonor, bestehend aus mindestens einer LEWIS-Base, bei der Herstellung der Suspension des Katalysatorfeststoffes vom Typ Ziegler oder des festen Bestandteils des Übergangsmetallträgers verwendet wird.

11. Verfahren nach einem der Ansprüche 1 bis 10, dadurch gekennzeichnet, daß für die verwendete inerte Flüssigkeit, die sowohl zur Herstellung der Suspension des Katalysatorfeststoffes oder des festen Bestandteils des Übergangsmetallträgers, als auch zum Waschen des aus der Filtration der Suspension erhaltenen Feststoffes eingesetzt wird, ein flüssiger Kohlenwasserstoff gewählt wird, und der genauer ausgedrückt aus einem oder mehreren Kohlenwasserstoffen besteht.

12. Verfahren nach einem der Ansprüche 2 bis 5, dadurch gekennzeichnet, daß man nach erfolgter Trocknung des Katalysatorfeststoffes vom Typ Ziegler und vor seiner Abnahme aus dem Drehreaktor, den getrockneten oder in Suspension gebrachten Feststoff mit einer bestimmten Menge eines oder mehrerer C₂ bis C₁₂ alpha-Olefine in Kontakt bringt. Diese werden an beliebiger Stelle des Reaktors injiziert, um ein Präpolymeres zu erhalten, das die katalytischen Feststoffpartikel in der Art umhüllt, daß ein aktiver alkylierter Feststoff zur Polymerisation der alpha-Olefine gebildet wird.

13. Verfahren nach einem der Ansprüche 1 bis 12, dadurch gekennzeichnet, daß vorzugsweise die bewegliche Schabvorrichtung und die Rührvorrichtung in der Primärzone des Drehreaktors eine Translation in Richtung der Achse des Reaktors und dazu noch Rotationen ausführen können.

14. Magnetisches Antriebssystem zur Rotation und zur Translation der Rührvorrichtung, das der Ausrüstung des Reaktors dient, dadurch gekennzeichnet, daß es eine röhrenförmige Welle (27) enthält, die an einem ihrer Enden mit der Rührerwelle (10) der Rührvorrichtung (9) verbunden ist und am anderen Ende einen ringförmigen magnetischen Massekopf (28) besitzt. Es ist ein abgedichtetes verschiebbares Zwischenstück, das in einer zylindrischen Bohrung (32) eines auf dem Reaktor angebrachten Führungsschaftes (33) eingelassen ist. Weiterhin enthält die Rührvorrichtung eine abgedeckte Führung (36) in zylindrischer Form, die in abgedichteter Weise am freien Ende (37) des Führungsschaftes angebracht ist. Diese abgedeckte Führung umgibt den ringförmigen magnetischen Massekopf (28) und weist, an seinem Boden (39) angebracht, einen zur röhrenförmigen Welle (27) koaxialen zylindrischen Führungsdorn (40) auf. Er läßt sich in die, zu ihm abgedichtete, genannte Welle verschieben. Weiterhin enthält die Rührvorrichtung einen Drehantrieb (30), der die abgedeckte Führung (36) ummantelt und der einen externen ringförmigen magnetischen Massekopf (29) besitzt. Er umgibt die genannte abgedeckte Führung in der Art, daß er magnetisch mit dem ringförmigen magnetischen Massekopf (28) wechselwirkt, damit eine Rotationsrespektive Translationsbewegung des Rotors (30) eine Rotations- respektive Translationsbewegung des mit der röhrenförmigen Welle (27) verbundenen magnetischen Massekopfes antreibt und infolgedessen eine Rotations- respektive Translationsbewegung der genannten Rührvorrichtung (9) bewirkt. Der Rotor (30) ist mit den technischen Vorrichtungen verbunden, die einerseits die Translationsbewegung und andererseits den Rotationsantrieb sicherstellen.

15. System nach Anspruch 14, dadurch gekennzeichnet, daß die technischen Vorrichtungen, die die Translationsbewegung des Rotors (30) und seinen Rotationsantrieb sicherstellen, einen Motor (13) beinhalten, der eine mit dem Rotor verbundene und koaxial zur Reaktorachse liegende Welle in Rotation versetzt. Dieser Motor ist auf einer Unterstützungsplatte (45) montiert, die wiederum von zur Reaktorachse parallel liegenden Hebern, die auf der gleichen Seite des Reaktors wie der Führungsschaft (33) befestigt sind, gehalten wird. Diese Heber stellen über die mit dem Rotor (30) verbundene Achse (44) die Translationsbewegung der Fläche (45) sicher und bewirken infolgedessen auch die Translationsbewegung des Rotors (30), der über die Achse (44) mit dem auf der genannten Fläche angebrachten Motor (13) verbunden ist.

16. System nach den Ansprüchen 14 oder 15, dadurch gekennzeichnet, daß die Abdichtung des Verschiebemechanismus der röhrenförmigen Welle (27) in der Bohrung (32) des Führungsschaftes (33) durch zwei Lager (34,35) aus selbstschmierendem Material, zum Beispiel mit Graphit oder Glasfaser versetztem Polytetrafluorethylen, bewerkstelligt wird, die jeweils in Halterungen zu beiden Seiten der Bohrung (32) des Führungsschaftes angebracht sind und die die röhrenförmige Welle (27) umschließen.

17. System nach Anspruch 16, dadurch gekennzeichnet, daß der Führungsschaft (33) mit einer Ansatzdüse (36) ausgestattet ist, die einen Zugang in das Innere der Bohrung zwischen den Lagern (34,35) gewährleistet.

18. System nach einem der Ansprüche 14 bis 17, dadurch gekennzeichnet, daß der Führungsschaft (33) an seinem freien Ende (37) einen Durchlaß (42) aufweist, der über die Ansatzdüse (43) in das Innere der abgedeckten Führung (36) mündet.

19. System nach einem der Ansprüche 14 bis 18, dadurch gekennzeichnet, daß die Abdichtung des Verschiebemechanismus der röhrenförmigen Welle am Führungsdorn (40), der auf dem Boden der abgedeckten Führung (36) aufgebracht ist, durch ein Lager (41) aus selbstschmierendem Material gewährleistet wird, wie zum Beispiel mit Graphit oder Glasfaser versetztem Polytetrafluorethylen, das in einer Halterung im magnetischen Massekopf (28) an der Endung der röhrenförmigen Welle (27) eingelassen ist und die genannte röhrenförmige Welle umschließt.

20. System nach einem der Ansprüche 14 bis 19, dadurch gekennzeichnet, daß die Translationsverschiebung des Rotors (30) so gewählt wird, daß sie dem möglichen Hub des Massekopfes (28) in der abgedeckten Führung (36) folgen kann. Dieser Hub folgt der Translationsverschiebung der Rührvorrichtung (9).

## Claims

1. A process for the synthesis of a catalytic solid of the Ziegler type, or a solid component of transition metal for such a catalyst, the said process being of the type in which the said catalytic solid or its component is first produced in the form of a suspension in an inert liquid medium, by bringing the precursor ingredients of the said catalytic solid or of the said component into contact in the said liquid medium, this contact being effected in a single step, or if necessary in a plurality of steps each separated from the next, by filtration with optional washing of the solid residue from the filtration and/or drying of the said washed residue, and the suspension of the catalytic solid or component is then subjected to filtration, the solid resulting from the filtration is washed once or several times using a liquid which is inert with a view to purification, the suspension is collected, or preferably the washed solid is dried and the dried solid is collected, the collected solid in suspension or dried constituting the said catalytic solid of the Ziegler type or the said solid component of transition metal, and being characterised in that the process is carried out in a single multifunctional reactor having a longitudinal axis and adapted to pivot about an axis intersecting this longitudinal axis at right angles, the said reactor comprising a chamber, adjustable for temperature and symmetrical with respect to the longitudinal axis of the reactor and divided, by a filter plate disposed at right angles to the axis of the reactor, into a primary zone, which includes a filter space adjacent to the filter plate, and a reaction space on the opposite side of the said plate, together with a secondary zone of smaller volume than the primary zone, the said primary zone being provided firstly with an agitating means, especially a scraping means, rotatable close to the filter plate and acting in the filter space, and a rotatable agitating means acting in the reaction space, and secondly with at least one orifice opening into the reaction space of the primary zone for introduction and evacuation of the reagents, together with at least one orifice opening into the filter space in the vicinity of the filter plate for introduction and evacuation of reagents and synthesised product, with the axis of the latter orifice meeting the longitudinal axis of the reactor at right angles to the pivot axis of the said reactor, while the secondary zone includes at least one orifice for evacuation and injection of a fluid, the said reactor being adapted to pivot through 180° about its pivot axis, so as to shift from one position, namely a lower position in which the axis of the reactor is vertical and the secondary zone of the chamber lies above the primary zone, to a position, namely an upper position, in which the axis of the reactor is vertical and the primary zone of the chamber is situated above the secondary zone, and so as also to occupy intermediate positions inclined to the vertical, and in that each of the steps of bringing the precursor ingredients of the said catalytic solid or of the said solid component into contact, leading to the obtaining of a suspension of a solid product in an inert liquid medium, together with some of the operations of washing the suspension, are carried out in the reaction space of the primary zone while the reactor is in its lower position, while each of the operations of filtration and drying, together with some of the washing operations, are carried out in the filtration zone of the primary zone while the reactor is in its upper position, the filtrates and washing liquids being evacuated through the orifice of the secondary zone, while the drying of the filtered and washed solid is carried out in any appropriate way, and preferably by means of an inert gas injected into the reactor through the orifice of the secondary zone, the solid in suspension or dried being extracted from the reactor, through the orifice situated in the primary zone in the vicinity of the filter plate, after the reactor has been tilted by pivoting into a position appropriate for this extraction.

2. A process according to Claim 1, characterised in that an unsupported catalytic solid of the Ziegler type is prepared by causing at least one compound of a transition metal in groups IV to VIII in the Periodic Table of the Elements to react in an inert liquid medium with at least one organo-metallic compound of a metal in groups I to III of the said Periodic Table, whereby to form a product which is insoluble in the said inert medium.

3. A process according to Claim 1, characterised in that a supported catalytic solid of the Ziegler type is prepared by bringing into contact with each other, in an inert liquid medium, a compound of a transition metal in groups IV to VIII of the Periodic Table of the Elements, a product such as to constitute a support, and an organo-metallic compound of a metal in groups I to III of the said Periodic Table of the Elements.

4. A process according to Claim 3, characterised in that the transition metal compound is put with the support, and the resulting product is then brought into contact with the organo-metallic compound.

5. A process according to Claim 4, characterised in that the support is formed from precursor ingredients, and/or the support is subjected to a modification treatment immediately before being brought in contact with the transition metal compound or while being so brought into contact.

6. A process according to Claim 1, characterised in that a supported solid component of transition metal is prepared by bringing a compound of transition metal in groups IV to VIII of the Periodic Table of the Elements into contact, in an inert liquid medium, with a compound such as to constitute a support, the said support being capable of being formed from precursor ingredients and/or of undergoing a modifying treatment immediately before it is brought into contact with the transition metal compound, or while being so brought into contact.

7. A process according to one of Claims 2 to 6, characterised in that the transition metal compound is a compound of titanium, vanadium, chromium, zirconium or hafnium.

8. A process according to one of Claims 3 to 7, characterised in that the support which is used in the preparation of the supported catalytic solid or of the supported solid component of transition metal is a solid magnesium compound preformed or prepared in situ, for example MgCl₂ used alone or associated with a porous oxide compound selected from SiO₂, Al₂O₃, TiO₂, ZrO₂, zeolites, a mixture of oxides which comprises SiO₂ together with one or a plurality of metallic oxides selected from ZrO₂, TiO₂, MgO and Al₂O₃ or an organic product, polymeric or otherwise, for example a product which includes silicon, of the siloxane type.

9. A process according to one of Claims 2 to 5, characterised in that the organo-metallic compound is selected from isoprenyl aluminium, alumoxane compounds of the formula 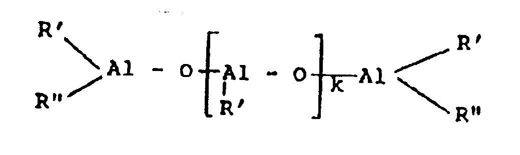 alkyl aluminium compounds of the formula Al(R′)_{q}XᵣHₛ, hydrocarbyl magnesium compounds of the formula YMgR′, and hydrocarbyl zinc compounds of the formula YZnR′, where, in these formulae, X is Cl or a monovalent OR′ radical, Y represents Cl or R′, R′ being an alkyl radical in C₁ to C₁₆ and preferably C₁ to C₁₂, and q, r and s are numbers such that 1<q<3, 0<r<2 and 0<s<2 with q+r+s = 3, with the R˝ radicals either each designating one R′ radical or together forming a bivalent -O-radical, and k is an integer from 0 to 18.

10. A process according to one of Claims 1 to 9, characterised in that an electron donor comprising at least one LEWIS base is used in the preparation of the suspension of the Ziegler-type catalytic solid or of the supported solid component of transition metal.

11. A process according to one of Claims 1 to 10, characterised in that the inert liquid which is used both for the preparation of the suspension of the catalytic solid or of the supported solid component of transition metal, and for washing the solid obtained from the filtration of the suspension, is selected from among the liquid hydrocarbons, and consists in particular of one aliphatic hydrocarbon or a plurality thereof.

12. A process according to one of Claims 2 to 5, characterised in that, when drying of the Ziegler-type catalytic solid is complete, and before it is extracted from the pivoting reactor, the solid, having been dried or put back in suspension, is brought into contact with a controlled quantity of one alpha-olefin in C₂ to C₁₂ or a plurality thereof, injected into the reactor at any point whatsoever so as to form a prepolymer that coats the particles of catalytic solid in such a way as to produce an active hydrocarbonated solid for polymerising the alpha-olefins.

13. A process according to one of Claims 1 to 12, characterised in that the movable means, preferably for scraping, and the movable agitating means that are present in the primary zone of the pivoting reactor are movable in straight line motion along the axis of the reactor, besides being movable in rotation.

14. A magnetic drive system for driving, in rotation and in straight line movement, an agitator forming part of a reactor characterised in that it comprises a tubular shaft (27), which is connected at one of its ends to the stem (10) of the agitator (9) and includes at its other end an annular magnetic element (28), and which has an intermediate portion sliding sealingly in a cylindrical bore (32) formed in a guide tube (33) which is fixed on the reactor, a guide cap (36), of cylindrical shape and mounted sealingly at the free end (37) of the guide tube, with the said guide cap enclosing the annular magnetic element (28) and having, fixed to its base (39), a cylindrical guide bar (40) which is coaxial with the tubular shaft (27) and on which the said shaft slides sealingly, and a drive rotor (30) which encloses the guide cap (36) and which includes an external annular magnetic element (29) surrounding the said guide cap so as to cooperate magnetically with the annular magnetic element (28) so that a displacement of the rotor (30), in rotation or in straight line motion, produces displacement, in rotation or in a straight line respectively, of the magnetic element (28) together with the tubular shaft (27), and consequently a displacement of the agitator (9) in rotation or in a straight line respectively, the said rotor (30) being associated with means firstly for displacing it in straight line motion and secondly for driving it in rotation.

15. A system according to Claim 14, characterised in that the means for displacing the rotor (30) in straight line motion and for driving it in rotation consist of a motor (13) driving in rotation a shaft (44) fixed to the rotor (30) and coaxial with the axis of the reactor, the said motor being mounted on a support plate (45) which is itself supported by jacks (12) having axes parallel to the axis of the reactor and fixed to the reactor on the same side as the guide tube (33), with these jacks displacing in straight line motion the plate (45) with the shaft (44) fixed to the rotor (30) passing through it, and consequently causing the rotor (30), fixed by means of the shaft (44) to the motor (13) mounted on the said plate, to be displaced in straight line motion.

16. A system according to Claim 14 or Claim 15, characterised in that the sealed sliding movement of the tubular shaft (27) in the bore (32) of the guide tube (33) is provided by means of two bearings (34, 35) of self-lubricating material, for example polytetrafluorethylene charged with graphite or glass fibres, each of which is mounted in a seating formed at each of the ends of the bore (32) of the guide tube, with the bearings surrounding the tubular shaft (27).

17. A system according to Claim 16, characterised in that the guide tube (33) is provided with a nozzle (36) having a through passage which is open into the bore (32) between the bearings (34, 35).

18. A system according to one of Claims 14 to 17, characterised in that, in the vicinity of its free end (37), the guide tube (33) has a through passage (42) which is open through a nozzle (43) in the interior of the guide cap (36).

19. A system according to one of Claims 14 to 18, characterised in that the sealed sliding movement of the tubular shaft (27) on the rod (40), fixed to the base (39) of the guide cap (36), is obtained by means of a bearing (41) of a self-lubricating material, for example polytetrafluorethylene charged with graphite or glass fibres, which is mounted in a seating formed in the magnetic element (28) at the end of the tubular shaft (27) and which surrounds the said tubular shaft.

20. A system according to one of Claims 14 to 19, characterised in that the displacement of the rotor (30) in straight line motion is chosen to correspond with the possible travel of the magnetic element (28) in the guide cap (36), the said travel corresponding to the displacement of the agitator (9) in straight line motion.
